# FASCICULE DE BREVET EUROPEEN

(11) **EP 2 852 205 B1**
(45) Date de publication et mention de la délivrance du brevet: **06.11.2019**
(21) Numéro de dépôt: 14185503.1
(22) Date de dépôt: 19.09.2014
(51) Int. Cl.: H04W 64/00, H04W 24/02, H04W 16/18, H04W 84/00

(54) **Procédé d'aide à l'implantation des points d'accès d'une infrastructure de radiocommunication le long d'une voie ferrée**
Verfahren zur Positionierung von Zugangspunkten eines Funkkommunikationssystems entlang einer Eisenbahn
Method for positioning the access points of a radio communication system along the railway

(30) Priorité: 20.09.2013 FR 1359056
(43) Date de publication de la demande: 25.03.2015
(73) Titulaire: ALSTOM Transport Technologies, 93400 Saint-Ouen (FR)
(72) Inventeur: Marchou, Vincent, 75015 Paris (FR)
(74) Mandataire: Lavoix

(56) Documents cités:
- US-A1- 2008 182 583
- HILLS A ET AL: "ROLLABOUT: A WIRELESS DESIGN TOOL", IEEE COMMUNICATIONS MAGAZINE, IEEE SERVICE CENTER, PISCATAWAY, US, vol. 42, no. 2, 1 février 2004 (2004-02-01), pages 132-138, XP001047865, ISSN: 0163-6804, DOI: 10.1109/MCOM.2003.1267112

## Description

L'invention a pour domaine celui des procédés d'aide à l'implantation, le long d'une voie ferrée, des points d'accès d'une infrastructure de radiocommunication.

Un système de communication, par exemple du type DCS (selon l'acronyme anglais de « Data Communication System »), est un composant de l'architecture de contrôle de la circulation des trains, par exemple du type CBTC (selon l'acronyme anglais « Communication Based Train Control »).

Le système de communication est fondé sur une infrastructure de radiocommunication comportant une pluralité de points d'accès, fixes au sol, qui sont répartis le long de la voie. Un point d'accès permet l'établissement d'une connexion sans fil avec un dispositif embarqué à bord d'un train circulant le long de la voie, lorsque ce dispositif se situe à l'intérieur de la cellule de couverture associée au point d'accès. La connexion sans fil respecte par exemple le protocole WiFi 802.11.

L'infrastructure de radiocommunication doit présenter une couverture continue sur la totalité de la longueur de la voie, de manière à permettre à un train circulant le long de celle-ci de communiquer en permanence avec le sol, pour échanger des données relatives au contrôle et à la sécurité de son déplacement.

En conséquence, l'implantation des différents points d'accès constitutifs de l'infrastructure de radiocommunication doit conduire à l'obtention d'une couverture continue, c'est-à-dire telle que les cellules de couverture de deux points d'accès disposés successivement le long de la voie se recouvrent partiellement.

Jusqu'à présent, l'implantation des points d'accès est réalisée, sur site, selon un plan résultant d'une étude théorique menée en bureau d'étude. Cette étude prend en compte des marges importantes pour garantir la continuité de la couverture de l'infrastructure à réaliser.

L'implantation comporte une mise en place temporaire des points d'accès, aux points kilométriques indiqués sur le plan.

Puis, une étude de couverture est réalisée, consistant à faire circuler un véhicule le long de la voie entre les points d'accès prépositionnés, de manière à vérifier qu'il y a effectivement continuité de la couverture de radiocommunication.

Suite à cette étude, le plan est actualisé. En particulier, en cas de discontinuité de la couverture, un point d'accès supplémentaire est disposé de manière à ce que sa cellule de couverture vienne combler le trou identifié, ou les deux points d'accès voisins sont rapprochés l'un de l'autre pour combler le trou identifié.

Finalement, les points d'accès sont définitivement installés aux points kilométriques indiqués sur le plan actualisé.

Cette manière de procéder conduit à un recouvrement important des différentes cellules entre elles et, par conséquent, à l'utilisation d'un grand nombre de points d'accès.

Il existe donc un besoin pour optimiser le nombre et le placement des points d'accès d'une infrastructure de radiocommunication le long d'une voie ferrée, tout en garantissant la réalisation d'une infrastructure de radiocommunication formant une couverture continue.

Par ailleurs, le document US 2008/182583 A1 divulgue un procédé consistant à disposer des points d'accès Wi-Fi dans un environnement, à collecter des informations relative à la couverture initiale de manière à renseigner un modèle informatique, puis, de manière logicielle, à calculer la valeur d'une métrique permettant d'optimiser la position des points d'accès, notamment pour réduire les zones de discontinuité de la couverture.

L'article de Hills et al. "ROLLABOUT: A WRELESS DESIGN TOOL", IEEE COMMUNICATIONS MAGAZINE, IEEE SERVICE CENTER, PISCATAWAY, US, vol. 42, no. 2, 1 février 2004 (2004-02-01), pages 132-138, divulgue un chariot mobile comportant un récepteur Wi-Fi, un moyen de localisation du chariot, et un ordinateur connecté au récepteur et au moyen de localisation et propre à générer, au cours du déplacement du chariot, une cartographie de la couverture des points d'accès situés dans l'environnement.

L'invention a donc pour but de répondre à ce besoin.

L'invention a pour objet un procédé d'aide à l'implantation, le long d'une voie ferrée, d'une pluralité de points d'accès d'une infrastructure de radiocommunication, et un système pour la mise en œuvre de ce procédé tels que définis par les revendications annexées.

L'invention et ses avantages seront mieux compris à la lecture de la description qui va suivre de deux modes de réalisation du procédé de l'invention, donnés uniquement à titre d'exemple illustratif et non limitatif, et faite en se référant aux dessins annexés sur lesquels :
- la figure 1 est une représentation schématique du système pour la mise en œuvre d'un premier mode de réalisation du procédé d'aide à l'implantation de points d'accès conformément à l'invention ;
- la figure 2 est une représentation schématique des différentes étapes du premier mode de réalisation du procédé ; et,
- la figure 3 est une représentation schématique d'un second mode de réalisation du procédé.

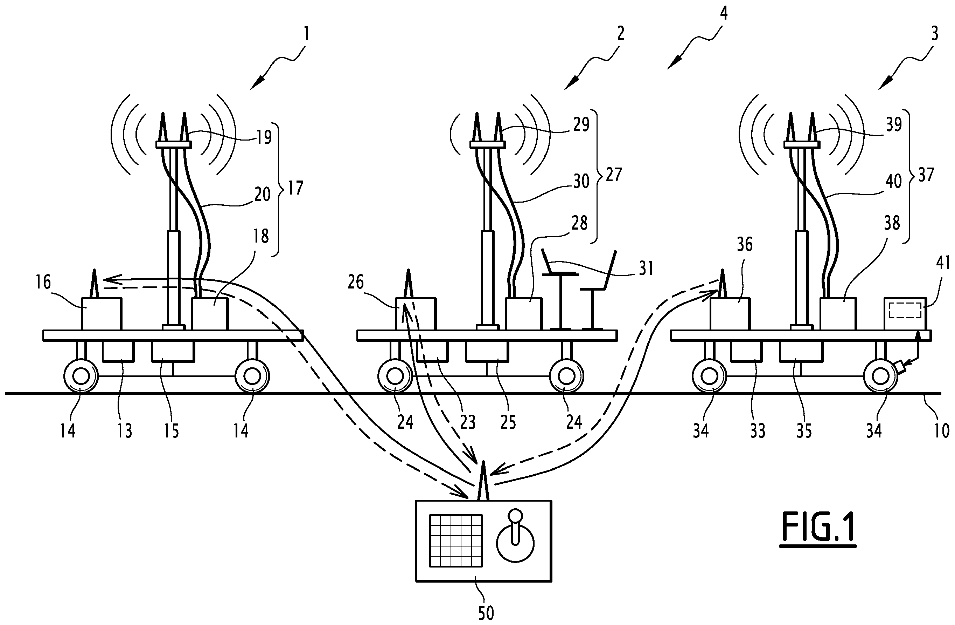

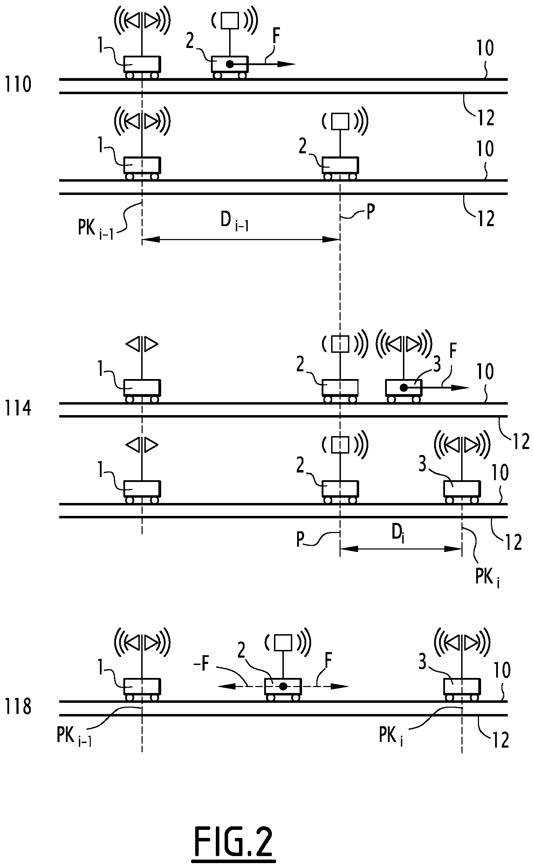

Un premier mode de réalisation du procédé d'aide à l'implantation, le long d'une voie ferrée, des points d'accès d'une infrastructure de radiocommunication va maintenant être décrit en référence aux figures 1 et 2.

La mise en œuvre de ce procédé s'effectue au moyen d'un système 4 comportant un premier chariot émetteur 1, un chariot récepteur 2 et un second chariot émetteur 3.

Le premier chariot émetteur 1 comporte :
- une source de puissance électrique 13, permettant d'alimenter les différents équipements du chariot ;
- des roues 14, adaptées à la circulation du chariot sur la voie ferrée 10, le long de laquelle l'infrastructure de radiocommunication est à implanter ;
- des moyens de propulsion 15, comportant un moteur électrique et des moyens de couplage du moteur aux roues 14, pour déplacer le chariot le long de la voie ;
- un dispositif de commande 16, permettant à un opérateur muni d'une télécommande 50 de commander à distance les moyens de propulsion 15 ; et,
- un moyen d'émission radioélectrique 17, permettant au premier chariot émetteur 1 de simuler le fonctionnement d'un point d'accès à implanter ;

Le moyen d'émission 17 est similaire à celui équipant un des points d'accès à implanter le long de la voie 10.

Le moyen d'émission 17 comporte un module de radiocommunication 18, un ensemble d'antennes 19, et des câbles 20 connectant le module 18 à l'ensemble d'antennes 19.

Le chariot émetteur 1 comporte un mât au sommet duquel est fixé l'ensemble d'antennes 19.

L'ensemble d'antennes 19 est par exemple constitué de quatre antennes « patch » similaires entre elles et disposées selon un motif prédéfini. Elles sont propres à fonctionner par exemple par dans la bande de fréquences allouée de 5,150 GHz à 5,875 GHz.

Les longueurs des câbles 20 entre le module 18 et l'ensemble d'antennes 19 sont choisies pour être égales à celle utilisées dans les points d'accès à implanter, de manière à simuler les pertes de puissance le long de ce câble.

En effet, la puissance d'un signal émis par le moyen d'émission est une mesure pied d'antenne, c'est-à-dire à la sortie du module de radiocommunication 18.

En fonctionnement, le moyen 17 émet périodiquement un signal caractéristique dans un canal de la bande de fréquences allouée à l'infrastructure de radiocommunication. Le signal caractéristique est par exemple un signal de balise, émis périodiquement, par exemple toutes les 30 ms. Comme connu de l'homme du métier, un signal de balise permet à un récepteur de détecter la présence d'un point d'accès avant d'initier un processus d'établissement d'une liaison sans fil. En particulier, le signal de balise comporte une information d'identification du premier chariot émetteur 1, telle qu'une adresse MAC de ce chariot.

Le second chariot émetteur 3 est identique au premier chariot émetteur 1.

Il comporte :
- une source de puissance électrique 33;
- des roues 34 ;
- des moyens de propulsion 35 ;
- un dispositif de commande 36, permettant à un opérateur muni de la télécommande 50 de commander à distance les moyens de propulsion 35 pour déplacer le chariot 3 ; et,
- un moyen d'émission radioélectrique 37, permettant au second chariot émetteur 3 de simuler le fonctionnement d'un point d'accès à implanter.

Le moyen 37 comporte un module de radiocommunication 38, un ensemble d'antennes 39, et des câbles 40 connectant le module 38 à l'ensemble d'antennes 39.

En fonctionnement, le moyen 37 émet périodiquement un signal de balise comportant l'adresse MAC du second chariot émetteur 3. Ce signal de balise est émis dans le même canal que celui utilisé par le moyen d'émission radioélectrique 17 du premier chariot émetteur 1.

Le second chariot émetteur 3 comporte, en outre :
- un odomètre 41, permettant de déterminer la position instantanée du second chariot émetteur 3 le long de la voie 10 ; de préférence, cette mesure de la position est donnée sous la forme d'un point kilométrique PK par rapport à un point de référence pris comme origine de la voie 10 ;

Comme les chariots émetteurs, le chariot récepteur 2 comporte :
- une source de puissance électrique 23;
- des roues 24 ;
- des moyens de propulsion 25 ; et
- un dispositif de commande 26, permettant à un opérateur muni de la télécommande 50 de commander à distance les moyens de propulsion 25 pour déplacer le chariot 2.

Le chariot 2 comporte un moyen de réception radioélectrique 27 permettant au chariot récepteur 2 de simuler le fonctionnement d'un dispositif récepteur embarqué à bord d'un train propre à circuler sur la voie 10 ;

Le moyen de réception 27 est similaire à celui équipant un dispositif embarqué. Il comporte un module de radiocommunication 28, un ensemble d'antennes 29, et des câbles 30 connectant le module à l'ensemble d'antennes. Le module de réception 28 est propre à délivrer une mesure de la puissance pied d'antenne d'un signal reçu, ainsi que l'adresse MAC contenue dans le signal reçu.

Un chariot récepteur 2 comporte un mât, au sommet duquel est fixé un support sur lequel est monté l'ensemble d'antennes 29.

La hauteur du mât est réglable verticalement, de manière à ce que la hauteur de l'ensemble d'antennes 29 corresponde à celle de l'ensemble d'antennes du dispositif embarqué à bord d'un train.

Avantageusement, lorsque l'ensemble d'antennes 29 est destiné à être installé sur le toit du train, sur un support métallique, le support du chariot récepteur est métallique et reprend la forme du support utilisé sur le train. Cela permet de prendre en compte l'influence de ce support métallique dans la réception des signaux.

L'ensemble d'antennes 19 comporte par exemple une antenne du type « shark », propre à fonctionner dans la bande de fréquence allouée.

L'ensemble d'antennes 19 présente un diagramme de rayonnement qui n'est pas symétrique dans un plan horizontal. En particulier, lorsqu'il est monté sur un train l'ensemble d'antennes présente un diagramme ayant un lobe principal orienté selon une direction coïncidant avec une direction vers l'avant du train et un lobe secondaire orienté selon une direction coïncidant avec une direction vers l'arrière du train.

On veillera alors à monter l'ensemble d'antennes 29 sur le chariot récepteur 2 de telle sorte que le lobe principale corresponde à la direction de déplacement vers l'avant du chariot 2 (direction F sur la figure 2) et le lobe secondaire à la direction de déplacement vers l'arrière du chariot 2 (direction -F sur la figure 2).

Le chariot récepteur 2 comporte enfin un terminal de traitement 31, par exemple un ordinateur portable, connecté au moyen de réception 27.

Le terminal de traitement 31 est propre à analyser les informations délivrées par le module 28. En particulier, il est propre à collecter, en continu, et pour chaque adresse MAC, la mesure de la puissance P du signal reçu.

Le terminal de traitement 31 est propre à comparer la puissance P mesurée à une puissance de référence, P0, valant par exemple -68 dBm.

Dès que la puissance P est inférieure à la puissance de référence P0, le terminal de traitement est propre à générer un premier signal d'alarme.

Le procédé va maintenant être présenté par référence à la figure 2.

Le procédé est itératif. Une itération est repérée par l'identifiant i.

Le moyen d'émission 17 du premier chariot émetteur 1 et le moyen d'émission 37 du second chariot émetteur 3 sont actifs et fonctionnent simultanément sur un même canal de la bande de fréquences allouée. Des signaux de balise sont ainsi émis périodiquement. Il est avantageux d'utiliser le même canal pour une visualisation simultanée des puissances des deux signaux sur le terminal de traitement 31. En mode commercial, des canaux différents sont bien évidemment utilisés pour éviter les interférences.

Une itération débute par une étape 110 consistant à déplacer le premier chariot émetteur 1, placé sur la voie ferrée 10, pour l'amener en un point kilométrique PKᵢ₋₁, correspondant au point d'implantation d'un point d'accès déterminé à l'itération précédente du procédé.

Le moyen de réception 27 du chariot 2 est actif, de sorte que le terminal de traitement 31 collecte en temps réel la puissance P1 du signal émis par le premier chariot émetteur 1 et reçu par le chariot récepteur 2.

Le chariot récepteur 2, placé sur la voie 10, est alors déplacé le long de celle-ci, selon une direction vers l'avant, indiquée par la flèche F sur la figure 2, de manière à écarter le chariot récepteur 2 du premier chariot émetteur 1.

Dès que la puissance P1 est inférieure à la puissance de référence P0, le terminal de traitement 31 émet un premier signal d'alerte, conduisant à l'immobilisation du chariot récepteur 2 à l'endroit où il se trouve à cet instant.

A la fin de l'étape 110, la dimension maximale Dᵢ₋₁ d'une cellule de couverture amont est obtenue.

Puis, à l'étape 114, le second chariot émetteur 3, placé sur la voie 10, est alors déplacé selon la direction vers l'avant, F, à l'écart du chariot récepteur 2.

Le moyen de réception du chariot récepteur 2 est actif et le terminal de traitement 31 collecte en temps réel la puissance P3 du signal émis par le second chariot émetteur 3 et reçu par le chariot récepteur 2.

Dès que la puissance mesurée P3 est inférieure à la puissance de référence P0, le terminal de traitement 31 émet un premier signal d'alerte, conduisant à l'immobilisation du second chariot émetteur 3 à l'endroit où il se trouve à cet instant.

A la fin de l'étape 114, le second chariot émetteur 3 est immobilisé.

Avantageusement, une étape 118 supplémentaire est réalisée, qui consiste à déplacer le chariot récepteur 2 de manière à parcourir la section de voie 10 entre les premier et second chariots émetteurs, 1 et 3, immobilisés pour vérifier la continuité de la couverture radioélectrique.

Si la vérification est négative et que la couverture n'est pas continue sur cette portion de voie, le second chariot émetteur 3 est déplacé vers le premier chariot émetteur 1, selon une direction vers l'arrière, -F, de manière à réduire la taille de la cellule associée au second chariot émetteur 3. L'étape de vérification est exécutée jusqu'à obtenir une couverture continue.

S'il n'y a qu'un seul moyen de réception sur le chariot récepteur et pour tenir compte d'une asymétrie dans le diagramme d'émission de l'ensemble d'antennes, alors le procédé peut avantageusement se poursuivre en retournant le chariot récepteur 2 (ou l'ensemble d'antennes 29) pour simuler un train circulant sur la voie 10 dans le sens opposé (-F) et en réitérant les étapes précédentes de manière à ajuster la position du second chariot émetteur 3.

Une fois qu'une couverture continue est obtenue, l'odomètre 41 dont est équipé le second chariot émetteur 3 est utilisé pour mesurer la position instantanée du second chariot émetteur 3 le long de la voie 10.

Le point kilométrique PKᵢ mesuré correspond au point d'implantation du i^{ème} point d'accès de l'infrastructure. Cette position est mémorisée par exemple sur un plan de la voie.

Puis, le procédé se poursuit par une nouvelle itération. Le premier chariot émetteur 1 est alors déplacé au point kilométrique PKᵢ et les étapes 110 à 118 sont exécutées une nouvelle fois, de manière à déterminer le point d'implantation du point d'accès suivant.

Les différentes étapes sont ainsi itérées de manière à parcourir l'ensemble de la voie 10.

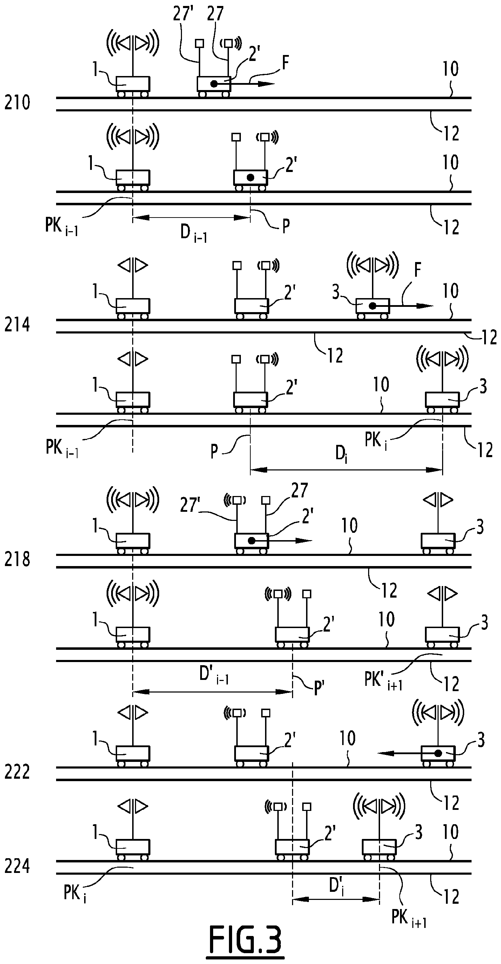

Un second mode de réalisation du procédé va maintenant être présenté en relation avec la figure 3. Ce second mode de réalisation met en œuvre un système modifié de la manière suivante, i+1.

Un train comporte souvent deux dispositifs de radiocommunication : l'un étant placé à l'avant du train et l'autre, à l'arrière du train.

L'ensemble d'antennes d'un dispositif de radiocommunication ne présente pas un diagramme de rayonnement symétrique dans le plan horizontal. Le gain selon une direction principale est supérieur au gain selon une direction opposée à la direction principale.

L'ensemble d'antennes à l'avant du train est fixé de manière à ce que sa direction principale pointe vers l'avant du train, tandis que l'ensemble d'antennes à l'arrière du train est fixé de manière à ce que sa direction principale pointe vers l'arrière du train. Ainsi, les ensembles d'antennes avant et arrière du train sont montés dos à dos.

La couverture de l'infrastructure à réaliser doit être continue à la fois pour le dispositif avant et pour le dispositif arrière du train.

Pour simuler la réception des signaux par les dispositifs avant et arrière d'un train, le chariot récepteur 2' comporte un moyen de réception avant 27, similaire à celui du dispositif avant d'un train, et un moyen de réception arrière 27', similaire à celui du dispositif arrière d'un train.

Chaque moyen de réception est identique au moyen de réception du chariot récepteur 2 du premier mode de réalisation.

L'ensemble d'antennes du moyen de réception avant 27 est porté par un support à l'extrémité d'un mât avant du chariot récepteur 2' de sorte que la direction principale de l'ensemble d'antennes pointe vers l'avant du chariot (direction F sur la figure 3), et l'ensemble d'antennes du moyen de réception arrière 27' est porté par un support à l'extrémité d'un mât arrière du chariot récepteur 2', de sorte que la direction principale de l'ensemble d'antennes pointe vers l'arrière du chariot (direction -F sur la figure 3).

Le terminal de traitement 31 du chariot de réception 2' est connecté au module du moyen de réception avant 27 et au module du moyen de réception arrière 27'. Chaque module est propre à mesurer la puissance d'un signal incident sur l'ensemble d'antennes associé. Cette mesure de puissance, ainsi que l'adresse MAC contenue dans le signal, sont appliquées en entrée du terminal de traitement.

Une itération i du procédé se déroule en deux phases successives.

La première phase est similaire au premier mode de réalisation ci-dessus.

Dans une première étape 210, le premier chariot émetteur 1 est déplacé le long de la voie 10 pour être positionné en un point kilométrique PKᵢ₋₁ correspondant au point d'implantation d'un point d'accès déterminé lors de l'itération précédente.

Le moyen d'émission du premier chariot 1 est en mode actif, de manière à ce qu'un signal caractéristique soit périodiquement émis.

Le moyen de réception avant 27 du chariot récepteur 2' est en mode actif, tandis que le moyen de réception arrière de celui-ci est en mode inactif.

Le chariot récepteur 2' est alors déplacé vers l'avant (selon la direction F) à l'écart du premier chariot émetteur 1. Le terminal de traitement 31 récupère la puissance P11 du signal reçu.

Dès que la puissance P11 est inférieure à la puissance de référence P0, le terminal de traitement émet un premier signal d'alerte propre à conduire à l'immobilisation du chariot récepteur 2.

A l'étape 214, le second chariot émetteur 3 est utilisé. Le moyen d'émission du premier chariot émetteur 1 est alors basculé en mode inactif, tandis que le moyen d'émission du second chariot émetteur 3 est basculé en mode actif.

Le moyen de réception avant 27 du chariot récepteur 2' reste en mode actif.

Le second chariot récepteur 3 est déplacé, vers l'avant, à l'écart du chariot émetteur 2'. Le terminal de traitement 31 mesure la puissance P31 du signal émis par le second chariot émetteur 3 et reçu par le chariot récepteur 2'.

Dès que la puissance P31 est inférieure à la puissance de référence P0, le terminal de traitement émet un premier signal d'alerte propre à conduire à l'immobilisation du second chariot émetteur 3.

L'odomètre 41 dont est équipé le second chariot émetteur 3 est interrogé pour obtenir une mesure de la position instantanée du second chariot émetteur 3 le long de la voie 10. Cette position correspond à une valeur provisoire du point kilométrique PKᵢ où implanter le i^{ème} point d'accès de l'infrastructure.

Le procédé se poursuit par une seconde phase dans laquelle le moyen de réception avant 27 du chariot récepteur 2' est en mode inactif et le moyen de réception arrière 27' du chariot récepteur 2' est en mode actif.

A l'étape 218, alors que le moyen d'émission du premier chariot émetteur 1 est activé, et le moyen d'émission du second chariot émetteur 3 est inactivé, le chariot récepteur 2' est déplacé vers l'avant, selon la direction F, à l'écart du chariot 1.

En effet, dans la première phase du procédé, le chariot récepteur 2' a été immobilisé au point PKᵢ au moment où l'ensemble d'antennes du moyen de réception avant 27, qui possède un gain réduit vers l'arrière, a perdu le contact avec le moyen d'émission du premier chariot émetteur 1. Puisque l'ensemble d'antennes du moyen de réception arrière 27' possède un gain plus important vers l'arrière, le moyen de réception arrière 27' du chariot récepteur 2' est en contact avec le moyen d'émission du premier chariot émetteur 1. Le chariot de réception 2' doit donc être déplacé vers l'avant pour rechercher le point où le moyen de réception arrière 27' perd le contact avec le premier chariot émetteur 1.

Le terminal de traitement mesure la puissance P12 du signal reçu et immobilise le chariot récepteur 2' dès que la puissance P12 est inférieure à la puissance de référence P0.

Puis, à l'étape 222, le moyen d'émission du premier chariot émetteur 1 est inactivé, tandis que le moyen d'émission du second chariot émetteur 3 est activé.

Toujours en utilisant le moyen de réception arrière 27', une mesure de puissance P32 du signal reçu par le chariot récepteur 2' en provenance du second chariot émetteur 3 est effectuée.

Si cette puissance P32 est supérieure à la puissance de référence P0, cela signifie que la position du chariot 3 permet une couverture continue à la fois pour le moyen de réception avant 27 (première phase du procédé) et pour le moyen de réception arrière 27' (seconde phase du procédé). La position provisoire du second chariot émetteur 3 est retenue comme point d'implantation PKᵢ du i^{ème} point d'accès.

En revanche, si la puissance P32 est inférieure à la puissance de référence P0, alors, à l'étape 224, le second chariot émetteur 3 est déplacé vers l'arrière, selon la direction - F, vers le chariot récepteur 2'.

Dès que la puissance P32 du signal reçu par le chariot récepteur 2' en provenance du second chariot émetteur 3 dépasse la puissance de référence P0, le terminal de traitement 31 génère un second signal d'alerte conduisant à l'immobilisation du second chariot émetteur 3.

L'odomètre 41 dont est équipé le second chariot émetteur 3 est interrogé pour mesurer la position actualisée PK'ᵢ. Cette position est retenue comme le point d'implantation du i^{ème} point d'accès.

Avantageusement, comme dans le premier mode de réalisation, à la suite des étapes 222 ou 224, une étape de vérification est réalisée consistant à déplacer le chariot récepteur 2' entre les chariots émetteurs 1 et 3 pour vérifier qu'il y a effectivement continuité de la couverture à la fois pour le moyen de réception avant 27 et pour le moyen de réception arrière 27', quel que soit le sens de parcours de la voie.

Puis le procédé est itéré pour déterminer le point d'implantation du point d'accès suivant. Pour cela, le premier chariot émetteur 1 est déplacé au point kilométrique PKᵢ ou PK'ᵢ venant d'être déterminé et les différentes étapes représentées sur la figure 3 sont répétées.

De proche en proche la longueur de la voie est parcourue de manière à déterminer les points d'implantation des points d'accès nécessaires à la réalisation d'une infrastructure de communication présentant une couverture continue.

Dans ce second mode de réalisation, puisque les deux moyens de réception doivent à tout instant et en même temps pouvoir établir une liaison de communication sans fil avec l'un ou l'autre des points d'accès, le procédé permet un dimensionnement des cellules par rapport au plus mauvais des moyens récepteurs, compte tenu de l'environnement d'exploitation.

Sur un train, l'ensemble d'antennes est parfois logé à l'intérieur de la cabine ou sous une couche de polymère de protection. Dans ce cas, on réalise des mesures de gain de l'ensemble d'antennes sur le train, avant d'ajuster la puissance de référence P0 à utiliser dans le procédé, par exemple en la diminuant de 3 dB. Lorsque le réseau étudié comporte une voie aller, référence 10 sur les figures, et une voie retour, référence 12 sur les figures, le point d'accès à implanter ne sera pas situé à l'aplomb de la voie, par exemple 10, utilisée pour mettre en œuvre le procédé venant d'être présenté. Le point d'accès sera par exemple centré entre les deux voies 10 et 12. Pour tenir compte de ce décalage latéral dans le positionnement des points d'accès, et par conséquent d'une atténuation supplémentaire des signaux radioélectriques, une correction, par exemple +3 dB, est prise en compte dans la puissance de référence P0 à utiliser dans le procédé.

Dans le cas par exemple d'une voie ferrée pour une ligne de métro, différentes stations sont prévues le long de la voie. Il ne faudrait pas que la mise en œuvre du présent procédé conduise à l'installation d'un point d'accès en plein centre d'une station. Le présent procédé est donc particulièrement bien adapté à une mise en œuvre sur une portion de voie entre deux stations successives.

Il est à noter que le présent procédé donne une limite supérieure sur la taille des cellules de l'infrastructure. Il est ainsi possible de réduire la taille des cellules en rapprochant les points d'implantation les uns des autres et en ajoutant des points d'accès supplémentaires.

L'homme du métier comprendra que la mise en œuvre du présent procédé présente de très nombreuses variantes, en particulier dans le matériel utilisé.

Par exemple, le second mode de réalisation du procédé pourrait être mis en œuvre au moyen du chariot de réception utilisé pour la mise en œuvre du premier mode de réalisation, en faisant faire un demi-tour à ce chariot récepteur entre les première et seconde phases d'une itération. Ainsi, alors que le moyen d'émission simule, dans la première phase, le comportement d'un dispositif de communication avant, il simule, dans la seconde phase, le dispositif de communication arrière d'un train.

Le présent procédé présente l'avantage de supprimer le recours à une étude théorique en début de projet. Ceci représente un gain de temps important. Il évite les erreurs liées par exemple à une configuration radioélectrique qui ne pouvait pas être anticipée ou prise en compte en bureau d'étude.

En maximisant la taille des cellules les unes par rapport aux autres, la mise en œuvre du procédé permet de minimiser le nombre de points d'accès nécessaires à l'obtention d'une couverture continue.

Si, dans le présent procédé, la puissance des signaux échangés a été mesurée et utilisée comme critère de détermination de la taille des cellules, en variante, d'autres informations relatives aux signaux pourraient être utilisées, telles que par exemple des informations relatives à la qualité de service sur la liaison temporaire entre un moyen d'émission et un moyen de réception.

Les moyens d'émission d'un point d'accès sont en fait des moyens d'émission / réception. De même, les moyens de réception d'un dispositif embarqué sont en fait des moyens d'émission / réception. Le fonctionnement d'un moyen radioélectrique en récepteur ou en émetteur est identique, en termes de diagrammes de rayonnement des antennes, de couverture et de taille de cellule. En conséquence, le présent procédé pourrait être mis en œuvre en inversant le mode de fonctionnement des moyens radioélectriques équipant les chariots, les premier et second chariots émetteurs devenant des premier et second chariots récepteur et le chariot récepteur devenant un chariot émetteur. Cependant, il faudrait alors utiliser deux terminaux de traitement pour traiter les mesures de puissance délivrées par chacun des deux moyens de réception.

## Revendications

1. Procédé d'aide à l'implantation, le long d'une voie ferrée (10, 12), d'une pluralité de points d'accès d'une infrastructure de radiocommunication, de manière à ce que l'infrastructure présente une couverture optimale pour un dispositif de radiocommunication embarqué à bord d'un véhicule circulant sur la voie,
**caractérisé en ce qu'**il consiste d'abord à fournir :
- des premier et second chariots émetteurs (1, 3), chaque chariot émetteur étant propre à circuler le long de la voie et comportant un moyen d'émission (17, 37), similaire à un moyen d'émission équipant les points d'accès à implanter et commandé pour émettre respectivement un premier signal caractéristique et un second signal caractéristique ; et,
- un chariot récepteur (2 ; 2'), propre à circuler le long de la voie et comportant au moins un moyen de réception le ou chaque moyen de réception (27, 27') étant similaire à un moyen de réception équipant le dispositif embarqué à bord d'un véhicule circulant sur la voie et étant propre à mesurer une première grandeur relative au premier signal caractéristique reçu et une seconde grandeur relative au second signal caractéristique reçu,
puis à réaliser les étapes consistant à :
- a) placer le premier chariot émetteur (1) en un point de la voie correspondant au point d'implantation d'un point d'accès ;
- b) alors que le moyen d'émission du premier chariot émetteur (1) émet un premier signal caractéristique, déplacer le chariot récepteur (2 ; 2') le long de la voie ferrée dans une première direction (F), à l'écart du premier chariot émetteur ;
- c) dès que ladite première grandeur (P1, P11) relative au premier signal caractéristique est inférieure à une valeur de référence (P0), immobiliser le chariot récepteur (2) ;
- d) alors que le moyen d'émission du second chariot émetteur (3) émet un second signal caractéristique, déplacer le second chariot émetteur (3) le long de la voie ferrée dans la première direction (F), à l'écart du chariot récepteur (2) ;
- e) dès que ladite seconde grandeur (P3, P31) relative au second signal caractéristique est inférieure à la valeur de référence (P0), immobiliser le second chariot émetteur (3) ; et
- f) mémoriser la position (PK'ᵢ) courante du second chariot émetteur en tant que point d'implantation d'un point d'accès,
les étapes a) à f) étant itérées en déplaçant, pour une itération suivante, le premier chariot émetteur (1) le long de la voie ferrée jusqu'au point d'implantation d'un point d'accès déterminé à une itération précédente, de manière à parcourir, de proche en proche, la voie ferrée (10).

2. Procédé selon la revendication 1, **caractérisé en ce que** le chariot récepteur (2') comporte :
- un moyen de réception avant (27), similaire à un moyen de réception avant d'un dispositif embarqué à l'avant d'un véhicule destiné à circuler sur la voie ; et,
- un moyen de réception arrière (27'), similaire à un moyen de réception arrière d'un dispositif embarqué à l'arrière d'un véhicule destiné à circuler sur la voie,
**en ce que** les étapes a) à e) sont mises en œuvre, en utilisant le moyen de réception avant (27) du chariot récepteur, de manière à déterminer un point d'implantation provisoire,
et **en ce que**, pour chaque itération, le procédé se poursuit par les étapes consistant à, en utilisant le moyen de réception arrière (27') du chariot récepteur :
g) Déplacer le chariot récepteur (2') dans la première direction (F), à l'écart du premier chariot émetteur (1);
h) Dès que la grandeur (P12) relative au premier signal caractéristique est inférieure à la valeur de référence (P0), immobiliser le chariot récepteur (2') ;
i) vérifier que la grandeur (P32) relative au second signal caractéristique est supérieure à la valeur de référence ; et, dans la négative,
j) Déplacer le second chariot émetteur (3) dans la direction opposée (-F), vers le chariot récepteur (2) ; et,
k) Dès que la grandeur (P32) relative au second signal caractéristique est supérieure à la valeur de référence, immobiliser le second chariot émetteur (2') ;
e) mémoriser la position (PK'ᵢ) courante du second chariot émetteur (3) en tant que point d'implantation d'un point d'accès.

3. Procédé selon l'une quelconque des revendications précédentes, dans lequel la grandeur relative au signal émis par un chariot émetteur et reçu par le chariot récepteur est la puissance (P) du signal.

4. Procédé selon l'une quelconque des revendications précédentes, dans lequel le signal caractéristique est un signal de balise comportant de préférence un identifiant du chariot émetteur.

5. Système pour la mise en œuvre d'un procédé conforme à l'une quelconque des revendications 1 à 4.

## Patentansprüche

1. Verfahren zur Unterstützung des Aufbaus einer Mehrzahl von Zugangspunkten zu einer Kommunikation-Infrastruktur entlang eines Schienenweges (10, 12) derart, dass die Infrastruktur eine optimale Überdeckung für eine Funkkommunikationsvorrichtung darstellt, die an Bord eines auf der Weg fahrenden Fahrzeugs mitgeführt wird,
**dadurch gekennzeichnet dass** es darin besteht, zuerst zu liefern:
einen ersten und zweiten Sendewagen (1, 3), wobei jeder Sendewagen geeignet ist, entlang des Weges zu fahren, und ein Sendemittel (17, 37) aufweist, das gleichartig zu einem Sendemittel ist, das die aufzubauenden Zugangspunkte ausrüstet und zum Senden jeweils eines ersten charakteristischen Signals gesteuert wird; und
einen Empfangswagen (2; 2'), der geeignet ist, entlang des Weges zu fahren und mindestens ein Empfangsmittel aufweist, wobei das oder jedes Empfangsmittel (27, 27') gleichartig zu einem Empfangsmittel ist, das die Vorrichtung ausrüstet, die an Bord eines Fahrzeugs, das auf dem Weg fährt, mitgeführt wird, und das geeignet ist, eine erste Größe relativ zum empfangenen ersten charakteristischen Signal und eine zweite Größe relativ zum empfangenen zweiten charakteristischen Signal zu messen, dann die Schritte zu realisieren, die darin bestehen:
a) den ersten Sendewagen (1) an einem Punkt des Weges entsprechend einem Punkt des Aufbaus eines Zugangspunktes anzuordnen;
b) während das Sendemittel des ersten Sendewagens (1) ein erstes charakteristisches Signal sendet, den Empfangswagen (2; 2') entlang des Schienenweges in eine erste Richtung (F) weg vom ersten Sendewagen zu bewegen;
c) sobald die erste Größe (P1, P11) relativ zum ersten charakteristischen Signal kleiner als ein Referenzwert (P0) ist, den Empfangswagen (2) anzuhalten;
d) während das Sendemittel des zweiten Sendewagens (3) ein zweites charakteristisches Signal sendet, den zweiten Sendewagen (3) entlang des Schienenweges in die erste Richtung (S) weg von dem Empfangswagen (2) zu bewegen;
e) sobald die zweite Größe (P3, P31) relativ zum zweiten charakteristischen Signal kleiner ist als der Referenzwert (P0) des zweiten Sendewagens (3) anzuhalten; und
f) die aktuelle Position (PK'ᵢ) des zweiten Sendewagens als Punkt des Aufbaus eines Zugangspunktes zu speichern, wobei die Schritte a) bis f) wiederholt werden, wobei für eine folgende Iteration der erste Sendewagen (1) entlang des Schienenweges bis zu dem Punkt des Aufbaus eines Zugangspunktes, der bei einer vorhergehenden Iteration bestimmt wurde, bewegt wird, um den Schienenweg allmählich zu durchlaufen.

2. Verfahren nach Anspruch 1, **dadurch gekennzeichnet, dass** der Empfangswagen (2') aufweist:
- ein vorderes Empfangsmittel (27), das gleichartig zu einem vorderen Empfangsmittel einer Vorrichtung ist, die an einer Vorderseite eines Fahrzeugs, das zum Fahren auf dem Weg bestimmt ist, mitgeführt wird; und
- ein hinteres Empfangsmittel (27'), das gleichartig zu einem hinteren Empfangsmittel einer Vorrichtung ist, die an einer Hinterseite eines Fahrzeugs, das zum Fahren auf dem Weg bestimmt ist, mitgeführt wird;
dass die Schritte a) bis e) unter Verwendung des vorderen Empfangsmittels (27) des Empfangswagens durchgeführt werden, um einen provisorischen Punkt des Aufbaus festzulegen,
und dass das Verfahren für jede Iteration durch die Schritte unter Verwendung des hinteren Empfangsmittels (27') des Empfangswagens weitergeführt wird:
g) Bewegen des Empfangswagens (2') in die erste Richtung (F) weg vom ersten Sendewagen (1);
h) sobald die Größe (P12) relativ zum ersten charakteristischen Signal kleiner ist als der Referenzwert (P0) Anhalten des Empfangswagens (2');
i) Überprüfen, dass die Größe (P32) relativ zum zweiten charakteristischen Signal größer als der Referenzwert ist; und im negativen Fall
j) Bewegen des zweiten Sendewagens (3) in die entgegengesetzte Richtung (-F) zu dem Empfangswagen (2); und
k) sobald die Größe (P32) relativ zum zweiten charakteristischen Signal größer ist als der Referenzwert, Anhalten des zweiten Sendewagens (2');
e) Speichern der aktuellen Position (PKᵢ') des zweiten Sendewagens (3) als Punkt des Aufbaus eines Zugangspunktes.

3. Verfahren nach einem beliebigen der vorhergehenden Ansprüche, bei dem die Größe relativ zum von einem Sendewagen gesendeten und von dem Empfangswagen empfangenen Signal die Leistung (P) des Signals ist.

4. Verfahren nach einem beliebigen der vorhergehenden Ansprüche, bei dem das charakteristische Signal ein Bakensignal ist, das vorzugsweise ein Kennzeichen des Sendewagens aufweist.

5. System für die Durchführung eines Verfahrens nach einem beliebigen der Ansprüche 1 bis 4.

## Claims

1. A method for assisting with the implantation, along a railway track (10, 12), of a plurality of access points of a radio-communications infrastructure, so that the infrastructure has an optimum coverage for a radio-communications device loaded on board a vehicle running on the track,
**characterised in that** it first consists of providing:
- first and second emitting wagons (1, 3), each emitting wagon being able to run along the track and including an emitting means (17, 37), similar to an emitting means which equips the access points to be implanted and controlled so as to emit respectively a first characteristic signal and a second characteristic signal; and,
- a receiving wagon (2; 2'), able to run along the track and including at least one receiving means, said or each receiving means (27, 27') being similar to a receiving means which equips the device loaded on board a vehicle running on the track and being able to measure a first quantity relating to the first characteristic signal and a second quantity relating to the second characteristic signal,
and then realising the steps consisting of:
- a) placing the first emitting wagon (1) in a point of the track corresponding to the implantation point of an access point determined in the preceding iteration;
- b) while the emitting means of the first emitting wagon (1) emits a first characteristic signal, moving the receiving wagon (2; 2') along the railway track in a first direction (F), away from the first emitting wagon;
- c) as soon as said first quantity (P1, P11) relating to the first characteristic signal is less than a reference value (P0), immobilizing the receiving wagon (2);
- d) while the emitting means of the second emitting wagon (3) emits a second characteristic signal, moving the second emitting wagon (3) along the railway track in the first direction (F), away from the receiving wagon (2);
- e) as soon as said second quantity (P3, P31) relating to the second characteristic signal is less than the reference value (P0), immobilizing the second emitting wagon (3); and
- f) storing in memory the current position (PK'ᵢ) of the second emitting wagon as an implantation point of an access point,
steps a) to f) being iterated by moving, for a following iteration, le first emitting wagon (1) along the railway track to the implantation point of an access point determined at a previous iteration, so as to gradually cover the railway track (10).

2. The method according to claim 1, **characterized in that** the receiving wagon (2') includes:
- a front receiving means (27), similar to a front receiving means of a device loaded at the front of a vehicle intended to run on the track; and,
- a rear receiving means (27'), similar to a rear receiving means of a device loaded at the rear of a vehicle intended to run on the track,
**in that** the steps a) to e) are applied by using the front receiving means (27) of the receiving wagon, so as to determine a provisional implantation point,
and **in that**, for each iteration, the method continues with the steps consisting of, by using the rear receiving means (27') of the receiving wagon:
g) moving the receiving wagon (2') in the first direction (F), away from the first emitting wagon (1);
h) as soon as the quantity (P12) relating to the first characteristic signal is less than the reference value (P0), immobilizing the receiving wagon (2');
i) checking whether the quantity (P32) relating to the second characteristic signal is greater than the reference value; and, if not,
j) moving the second emitting wagon (3) in the opposite direction (-F), towards the receiving wagon (2); and,
k) as soon as the quantity (P32) relating to the second characteristic signal is greater than the reference value, immobilizing the second emitting wagon (2');
e) storing in memory the current position (PK'ᵢ) of the second emitting wagon (3) as an implantation point of an access point.

3. The method according to any of the preceding claims, wherein the quantity relating to the signal emitted by the emitting wagon and received by the receiving wagon is the power (P) of the signal.

4. The method according to any of the preceding claims, wherein the characteristic signal is a beacon signal preferably including an identifier of the emitting wagon.

5. A system for applying a method according to any of claims 1 to 4.
